# EUROPEAN PATENT SPECIFICATION

(11) **EP 3 839 612 B1**
(45) Date of publication and mention of the grant of the patent: **14.10.2026**
(21) Application number: 19306740.2
(22) Date of filing: 20.12.2019
(51) Int. Cl.: G02C 1/02, G02C 1/00, G02C 7/10, G02C 7/12, G02C 9/00

(54) **OPHTHALMIC DEVICE HAVING ADJUSTABLE FILTERING PROPERTIES**
OPHTHALMISCHE VORRICHTUNG MIT EINSTELLBAREN FILTEREIGENSCHAFTEN
DISPOSITIF OPHTALMIQUE AYANT DES PROPRIÉTÉS DE FILTRAGE RÉGLABLES

(43) Date of publication of application: 23.06.2021
(73) Proprietor: ESSILOR INTERNATIONAL, 94220 Charenton-Le-Pont (FR)
(72) Inventor: JOUARD, Ludovic, 94220 CHARENTON LE PONT (FR); ROPTIN, Vincent, 94220 CHARENTON LE PONT (FR)
(74) Representative: Santarelli

(56) References cited:
- US-A- 4 119 369
- US-A- 4 202 601
- US-A- 5 114 218
- US-A- 5 663 779
- US-A1- 2009 213 283
- US-A1- 2016 026 007
- US-A1- 2018 017 780
- "Basic Polarization Techniques and Devices", 1 January 2005, MEADOWLARK OPTICS, article MEADOWLARK OPTICS: "Basic Polarization Techniques and Devices", XP055700813

## Description

### FIELD OF THE INVENTION

The invention relates to ophthalmic devices having adjustable filtering properties, such as hue or Chroma properties.

### BACKGROUND ART

American patent application US 2018/0017780 discloses an ophthalmic device provided with a colour changeable optical filter which is configured so that hue or Chroma of the light transmitted through the optical filter can be changed.

In an embodiment, the filter includes two polarizers, one of which being rotatable for changing hue or Chroma of the light transmitted through the optical filter.

In another embodiment, the colour changeable optical filter includes two polarizing films and a liquid crystal polarization rotator interposed between the polarizing films. The liquid crystal polarization rotator has two states which depends on the supplying or not of a voltage thereto. When no voltage is supplied to the liquid crystal polarization rotator, a polarization plane of light at the output of one of the two polarizing film is rotated (active state); while when the voltage is supplied to the liquid crystal polarization rotator, the polarization plane of light at the output of the polarizing film is not rotated (inactive state). In the active state, the rotation of the polarization plane allows changing hue or Chroma of the light transmitted through the optical filter; while in the inactive state, hue or Chroma are not changed.

Further ophthalmic devices are disclosed in US5663779A.

### SUMMARY OF THE INVENTION

The invention is directed to an ophthalmic device having adjustable filtering properties, such as hue or Chroma properties, which is improved and optimized and which is further convenient, simple, economic and easy to manufacture.

The invention accordingly provides an ophthalmic device having adjustable filtering properties, comprising at least one first polarizer, at least one second polarizer which is fixed relative to said first polarizer, and at least one adjustable filtering member located between said first and second polarizers and configured to rotate a polarization plane of light received from said first polarizer and propagating towards said second polarizer; wherein said adjustable filtering member is configured to admit a plurality of active states, in each of which said adjustable filtering member rotates the polarization plane according to a respective and predetermined angle, wherein said adjustable filtering member is a half-wave plate.

In other words, the adjustable filtering member is able to rotate the polarization plane of light received from the first polarizer and propagating towards the second polarizer, in a plurality of positions in order to adjust filtering properties of the ophthalmic device, such as hue or Chroma.

Each active state is defined by a predetermined and respective angle of rotation which is distinct from the other angles of the other active states. Said otherwise, there are as much angles of rotation of the polarization plane as active states.

A user of the ophthalmic device may thus adjust the filtering properties by selecting the active state of the adjustable filtering member which rotates the polarization plane as he may wish.

The fact that the first and second polarizers are fixed to each other makes easier the selection by the user of the needed active state amongst a plurality of active states.

According to the claimed subject-matter, the adjustable filtering member of the ophthalmic device is a half-wave plate.

Using a half-wave plate as adjustable filtering member allows to provide with a large number of active states having different angles of rotation which extend in a large range.

In particular, the predetermined angle by which is rotated the polarization plane of light is twice the angle made between the polarization plane of light received from the first polarizer and an axis characteristic of the half-wave plate (for instance the fast or slow axis of the half-wave plate). In other words, if the axis characteristic of the half-wave plate is rotated by an angle equal to θ with respect to the polarization axis of the first polarizer, the polarization plane of light received from the first polarizer and propagating towards the second polarizer is rotated by an angle equal to 2θ.

According to further advantageous and convenient features:
- said ophthalmic device comprises at least a frame in which are fixedly mounted said at least one first and at least one second polarizers;
- said frame is a spectacle frame having two bearing portions into each of which is at least partially mounted one said first polarizer, one said second polarizer and one said adjustable filtering member;
- said frame comprises a synchronization member connected to said two bearing portions and configured to synchronize the selected active states of said adjustable filtering members which are mounted in said two bearing portions, so that the corresponding angles of rotation of the respective polarization planes are similar;
- said at least one adjustable filtering member is rotatable with respect to said first and second polarizers;
- said active states are selected by rotating said at least one adjustable filtering member according to distinct angles of rotation;
- said ophthalmic device comprises at least an actuator configured for rotating said at least one adjustable filtering member, said actuator extending from a carrier of said ophthalmic device which is fixed to and at least partially surrounds said at least one adjustable filtering member, or is laminated on said at least one adjustable filtering member;
- said at least one second polarizer has a polarizing axis which is oriented parallel or perpendicular to a polarizing axis of said first polarizer;
- said adjustable filtering member is configured to rotate said polarization plane of light received from said at least one first polarizer on a range of 45° between 0° and 45°, and preferably on a range of 30° between 7,5° and 37,5°;
- said adjustable filtering member is a half-wave plate that is flat or curved;
- said ophthalmic device comprises at least one ophthalmic lens on which is fixed or which is integrally formed with at least one of said first and second polarizers;
- said at least one ophthalmic lens has corrective optical properties;
- said at least one adjustable filtering member is electrically controlled;
- said at least one adjustable filtering member is controlled by applying a predetermined voltage value selected amongst a range of voltage values, each voltage value corresponding to a respective active state and thus a respective predetermined angle of rotation of the polarization plane; and/or
- said adjustable filtering properties are configured for varying at least one of darkness, colours, contrast enhancer, and spectral behaviours depending on wavelengths.

### BRIEF DESCRIPTION OF THE DRAWINGS

The description of the invention now continues with a detailed description of advantageous embodiments given hereinafter by way of nonlimiting example and with reference to the appended drawings. In these drawings:
- Figure 1 is a perspective and partial view of an ophthalmic device according to the invention, comprising a spectacle frame, two eyeglasses each having adjustable filtering properties and a synchronization member connected to both eyeglasses for synchronizing their filtering properties;
- Figure 2 is an exploded view of the ophthalmic device of Figure 1, one of the eyeglasses being missing, the remaining eyeglass comprising - from right to left - a front polarizer, an adjustable filtering member fixed to a carrier and a rear polarizer;
- Figures 3 to 5 schematically illustrate the cooperation between the synchronization member and a variant of the carrier of the adjustable filtering member, the adjustable filtering member being in three distinct active states respectively between which it is rotatable;
- Figures 6 and 7 each schematically illustrate an eyeglass of the ophthalmic device and the resulting filtered light, the adjustable filtering member being in a first active state and in a second active state respectively;
- Figure 8 illustrates respective angular positions of a polarization axis of the front polarizer, a polarization axis of the second polarizer and an axis characteristic of the adjustable filtering member one with respect to the others, together with a range of angles of rotation for the axis characteristic of the adjustable filtering member selected as particularly efficient; and
- Figure 9 illustrates the variation of transmittance of the eyeglass of the Figure 1 as a function of the angle of rotation of the axis characteristic of the adjustable filtering member with respect to the polarization axis of the front polarizer of said eyeglass.

### DETAILED DESCRIPTION OF EXAMPLE EMBODIMENTS

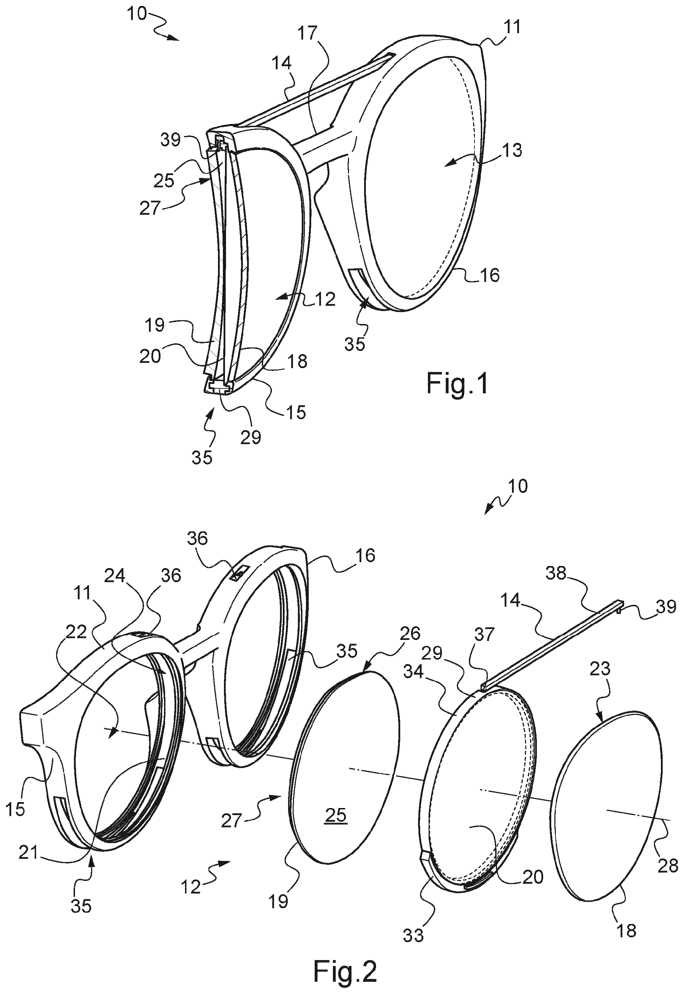

The ophthalmic device 10 illustrated on Figures 1 and 2 comprises a spectacle frame 11, a first eyeglass 12 and a second eyeglass 13.

The frame 11 comprises a first bearing portion 15 configured to receive the first eyeglass 12, a second bearing portion 16 configured to receive the second eyeglass 13, and a bridge 17 extending from the first bearing portion 15 to the second bearing portion 16.

The assembly formed by the first bearing portion 15 and the first eyeglass 12 is identical to the assembly formed by the second bearing portion 16 and the second eyeglass 13, except they are arranged symmetrically. The following description of the first bearing portion 15 and the first eyeglass 12 therefore applies *mutatis mutandis* to the second bearing portion 16 and the second eyeglass 13.

The bearing portion 15 has a generally annular shape and has an inner surface 21 defining an inner space 22 configured to at least partially receive the first eyeglass 12. The bearing portion 15 here entirely surrounds the first eyeglass 12. The bearing portion 15 has an outer surface 31 that is opposite to the inner surface 21.

The first eyeglass 12 is configured to have adjustable filtering properties.

Since it is desirable here that the first eyeglass 12 and the second eyeglass 13 have the same filtering properties at the same time, the ophthalmic device 10 comprises a synchronizing system configured to synchronize their filtering properties. The synchronizing system comprises here a synchronization member 14 connected to the bearing portions 15 and 16. This will be described in more details later.

The first eyeglass 12 comprises a first polarizer 18, a second polarizer 19 which is fixed relative to the first polarizer 18, and an adjustable filtering member 20 located between the first and second polarizers 18 and 19.

The adjustable filtering member 20 is here a half-wave plate.

The first polarizer 18 and the second polarizer 19 are each fixedly mounted in the first bearing portion 15 of the frame 11. In particular, the first and the second polarizers 18 and 19 are not free to rotate with respect to the first bearing portion 15.

In contrast, the adjustable filtering member 20 is here mounted in the bearing portion 15 so as to be free to rotate about an axial direction 28 according to which the first polarizer 18, the adjustable filtering member 20 and the second polarizer 19 are aligned.

The adjustable filtering member 20 is thus rotatable with respect to the first and second polarizers 18 and 19.

The first polarizer 18 is situated remote to the eye of a wearer (not shown) of the ophthalmic device 10 and is thus a front polarizer, while the second polarizer 19 is situated close to the eye of a wearer of the ophthalmic device 10 and is thus a rear polarizer.

Generally speaking, in the present memorandum the "rear" and "front" terms are to be understood as meaning closest to the eye of the user and remote to the eye of the user respectively.

In Figures 1 and 2, the eye of the user (not shown) is situated to the left of the frame 11.

The first polarizer 18 is here integrally formed with a disc-shaped element that has a substantially constant thickness. The first polarizer 18 has a peripheral side surface 23 that is configured to cooperate with the inner surface 21 of the bearing portion 15 for fixedly mounting the first polarizer 18 in the bearing portion 15, here by snap-fitting.

The disc-shaped element forming the first polarizer 18 here does not have corrective properties.

The second polarizer 19 is here integrally formed with an ophthalmic lens of the ophthalmic device 10. The second polarizer 19 has a peripheral side surface 26 that is configured to cooperate with the inner surface 21 of the bearing portion 15 for fixedly mounting the second polarizer 19 in the bearing portion 15.

The ophthalmic lens forming the second polarizer 19 here has corrective optical properties. In particular, the second polarizer 19 may have a front surface 25 and a rear surface 27, situated on either sides of the peripheral side surface 26, at least one of which is curved such that the second polarizer 19 has a varying thickness.

The adjustable filtering member 20 comprises here a polycarbonate film of 60 µm thickness configured to provide a half-wave plate function. The adjustable filtering member 20 here further comprises a cellulose triacetate (TAC) film of 190 µm thickness on which the polycarbonate film is laminated.

The first eyeglass 12 comprises here a carrier 29 that at least partially surrounds the adjustable filtering member 20 and to which is fixed the adjustable filtering member 20. The assembly formed by the carrier 29 and the adjustable filtering member 20 is here generally disc-shaped.

Here, the adjustable filtering member 20 is flat, that is to say not curved. In variant, the adjustable filtering member 20 may be curved, for instance for matching the curvature of the front surface 25 of the second polarizer 19, this being favourable to compactness of the ophthalmic device.

The carrier 29 is mounted in the bearing portion 15 so as to be free to rotate about the axial direction 28, thereby rotating the adjustable filtering member 20.

The carrier 29 here comprises a ring 34 of generally circular shape that here entirely surrounds the adjustable filtering member 20.

The carrier 29 further comprises an elongated rib 33 that projects externally from the ring 34, that is to say in a direction opposite to the adjustable filtering member 20. The rib 33 here projects radially from the generally circular ring 34 and extends longitudinally parallel to the ring 34.

The inner surface 21 of the bearing portion 15 has an annular recess 24 of generally circular shape configured to receive at least a portion - here a peripheral portion - of the carrier 29 and to form a sliding guide for the carrier 29 when the latter is rotated in the bearing portion 15.

The bearing portion 15 further comprises an elongated opening 35 that surrounds the inner space 22, leading both through the inner surface 21, into the recess 24, and through the outer surface 31.

The elongated opening 35 is here generally located to the side that is closest to the mouth of the wearer of the ophthalmic device 10.

The elongated opening 35 is configured to receive the elongated rib 33 and to form a sliding guide for the rib 33 when the carrier 29 is rotated. The opening 35 is further configured such that the elongated rib 33 is accessible to the wearer of the ophthalmic device 10, the rib 33 thereby forming an actuator that extends from the carrier 29 and that is configured for rotating the adjustable filtering member 20.

The rib 33 and the opening 35 are further configured to define predetermined angular positions of the carrier 29 and thus of the adjustable filtering member 20. More specifically, the carrier 29, together with the adjustable filtering member 20, may be rotated from an extreme position in which the rib 33 abuts against an end of the elongated opening 35 and another extreme position in which the rib 33 abuts against the opposite end of the elongated opening 35, said ends being longitudinally opposite to each other.

Here, the length of the elongated opening 35 is such that the angular range by which the carrier 29 and the adjustable filtering member 20 may be rotated is about 30°.

The carrier 29 further comprises a notch 37 formed into the ring 34 and extending transversally to the ring 34. The notch 37 is here located to the side that is closest to the forehead of the wearer of the ophthalmic device 10. In other words, the notch 37 is generally situated radially opposite to the rib 33 forming the actuator.

The bearing portion 15 further comprises a mounting hole 36, that is here located to the side that is closest to the forehead of the wearer of the ophthalmic device 10.

The mounting hole 36 and the notch 37 are configured for connecting the synchronization member 14 to the first bearing portion 15 and to its carrier 29; and the corresponding mounting hole 36 and the corresponding notch of the second bearing portion 16 are configured for connecting the synchronization member 14 to the second bearing portion 16 and to the carrier of the second bearing portion 16.

The synchronization member 14 here comprises a bar 38 and two pins 39 situated at a respective ends of the bar 38 and extending transversally to the bar 38.

The mounting hole 36 of the first bearing portion 15 and the corresponding mounting hole 36 of the second bearing portion 16 are configured to form a sliding guide for the bar 38 that is at least partially received in each mounting hole 36.

The bar 38 here extends generally parallel to the bridge 17 and is located closest to the forehead of a wearer of the ophthalmic device 10 than is the bridge 17.

Each pin 39 is configured to fit into the notch 37 of the carrier 29 of a respective of the first and second eyeglasses 12 and 13.

The synchronization member 14 is thereby configured such that a rotating movement of the carrier 29 in the first bearing portion 15 is replicated by the other carrier in the second bearing portion 16, and reciprocally.

It should be noted here that the synchronization member 14 is configured to look like another bridge extending between first and second bearing portions 15 and 16, such that the frame 11 looks like a "double bridge" frame that is a common design in eyewear industry.

It should further be noted that the synchronization member 14 also forms an actuator for rotating the carriers 29 and thus the adjustable filtering members 20, such that the ribs 33 may be optional.

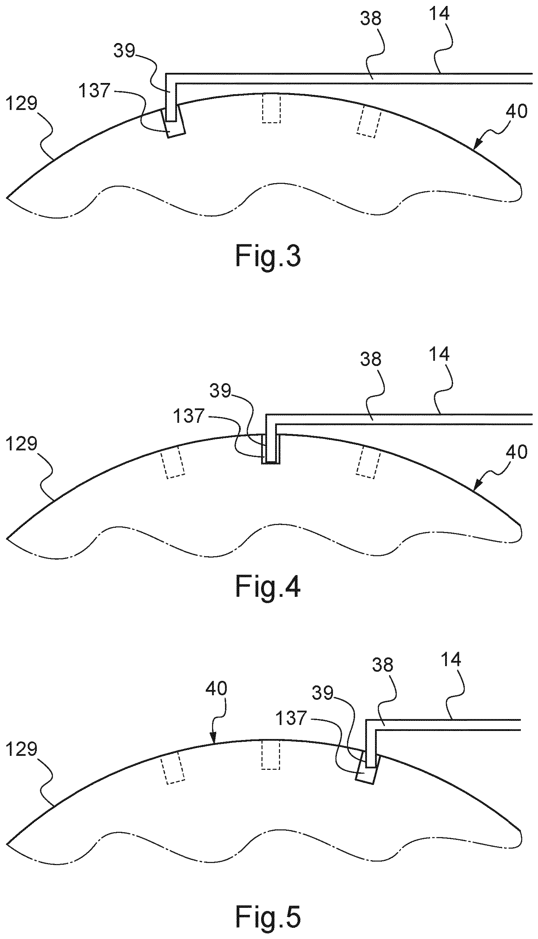

Figures 3 to 5 schematically illustrate the cooperation between the synchronization member 14 and a carrier 129 that is a variant of the carrier 29 for the adjustable filtering member 20.

The carrier 129 is similar to the carrier 29 except that the ring is replaced by a generally circular disc-shaped element 134 onto which the film configured to provide the half-wave plate function is laminated. Only a portion of the carrier 129 is shown on Figures 3 to 5.

The notch 37 is replaced by a hole 137 extending radially from a peripheral side 40 of the carrier 129.

Figures 3 and 5 respectively illustrate the above mentioned extreme positions between which the adjustable filtering member 20 may be rotated, which positions are angularly spaced by 30°; and Figure 4 illustrate an intermediate position between the two extreme positions, that is to say angularly spaced by 15° from each extreme position.

In each of Figures 3 to 5, the position of the hole 137 is shown for the two extreme positions and for the intermediate position of the adjustable filtering member 20, the hole 137 being drawn in full line at its current position and in broken line at the two other positions.

As explained in the following, it is possible to adjust the filtering properties of the first eyeglass 12 by rotating the adjustable filtering member 20 according to distinct angles of rotation, each corresponding to an active state of the adjustable filtering member 20.

The adjustable filtering member 20 is thus configured to admit a plurality of active states that are selected by rotating the adjustable filtering member 20 according to distinct angles of rotation, each corresponding to a respective active state.

The filtering properties of the first eyeglass 12 are defined by the cooperation of the adjustable filtering member 20 with the first polarizer 18 and the second polarizer 19.

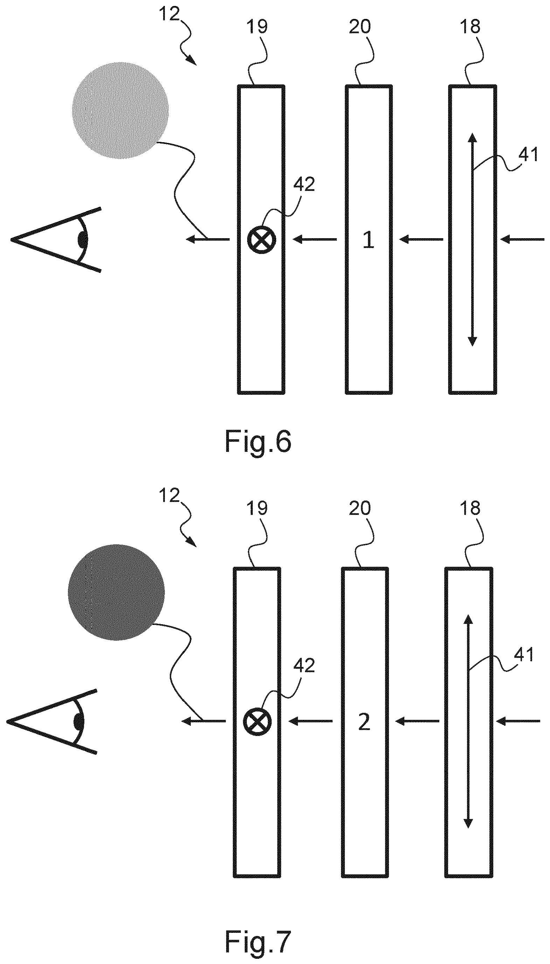

As shown on Figures 6 to 8, the first polarizer 18 has a first polarization axis 41 and the second polarizer 19 has a second polarization axis 42 that is oriented transversely to the polarization axis 41 of the first polarizer 18, here perpendicularly.

Since the adjustable filtering member 20 is a half-wave plate, it is configured to rotate the polarization plane of light received from the first polarizer 18 and propagating towards the second polarizer 19.

In particular, the predetermined angle by which is rotated the polarization plane of light is twice the angle made between the polarization plane of light received from the first polarizer 18 and an axis 43 characteristic of the half-wave plate (for instance the fast or slow axis of the half-wave plate). In other words, if the axis 43 characteristic of the half-wave plate is rotated by an angle equal to θ with respect to the polarization axis 41 of the first polarizer 18, the polarization plane of light received from the first polarizer 18 and propagating towards the second polarizer 19 is rotated by an angle equal to 2θ.

The angle θ between the axis 43 characteristic of the half-wave plate and the polarization axis 41 of the first polarizer 18 here defines an active state that the adjustable filtering member 20 is configured to admit. In each of the plurality of active states, the adjustable filtering member 20 rotates the polarization plane of light received from the first polarizer 18 according to a respective and predetermined angle, here an angle equal to 2θ.

The properties of the light transmitted by the eyeglass 12 - that is to say the resulting filtered light - will then depend on the orientation of the polarization plane of light received from the adjustable filtering member 20 with respect to the polarization axis 42 of the second polarizer 19.

Figures 6 and 7 each schematically illustrate the eyeglass 12 of the ophthalmic device 10 and the resulting filtered light, the adjustable filtering member 20 being in a first active state (denoted 1 on Figure 6) and in a second active state (denoted 2 on Figure 7) respectively.

On Figure 6, the polarization plane of light received from the adjustable filtering member 20 is more parallel to the polarization axis 42 than in Figure 7 such that more light is transmitted when the adjustable filtering member 20 is in the first active state (Figure 6) than when the adjustable filtering member 20 is in the second active state (Figure 7). The eyeglass 12 therefore appears darker on Figure 7 than on Figure 6.

It should be noted that rotating the adjustable filtering member 20 by an angle of 45° will result in a rotation of 90° of the polarization plane of light received from the first polarizer 18. In other words, a range from 0° to 45° for rotating the adjustable filtering member 20 is sufficient to pass this polarization plane from an orientation substantially perpendicular to the polarization axis 42 to an orientation substantially parallel to the polarization axis 42, corresponding respectively to the darker and the brighter appearances of the eyeglass 12.

Accordingly, the adjustable filtering member may be configured to rotate the polarization plane of light received from the first polarizer 18 on a range of angles of rotation of 45° between 0° and 45°, such angles being between the polarization axis 41 of the first polarizer 18 and the axis 43 characteristic of the half-wave plate.

In the above described embodiment, the adjustable filtering member 20 is configured to rotate the polarization plane of light received from the first polarizer 18 on a preferred range of angles of rotation of 30° between 7,5° and 37,5°, such angles being between the polarization axis 41 of the first polarizer 18 and the axis 43 characteristic of the half-wave plate.

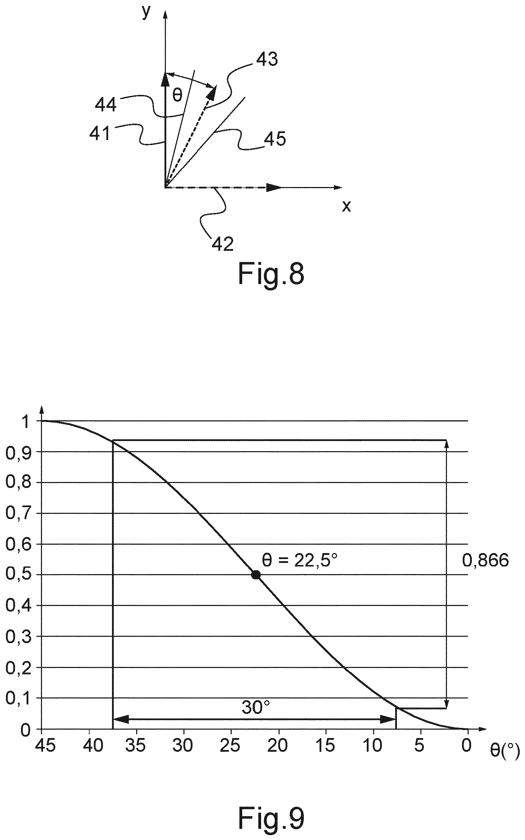

This preferred range of angles of rotation is diagrammatically shown on Figure 8 with the respective angular positions of the polarization axis 41 of the first polarizer 18, the polarization axis 42 of the second polarizer 19 and the axis 43 characteristic of the half-wave plate forming the adjustable filtering member 20. Here the axis 43 characteristic of the half-wave plate is the slow axis. Line 44 on Figure 8 corresponds to the angle of rotation of 7,5° to which is associated one of the above mentioned extreme positions illustrated on Figures 3 and 5, and line 45 on Figure 8 corresponds to the angle of rotation of 37,5° to which is associated the other of the above mentioned extreme positions illustrated on Figures 3 and 5. The axis 43 is in the middle of the range extending from 7,5° and 37,5°, that is to say the angle of rotation of 22,5° to which is associated the above mentioned intermediate position illustrated on Figure 4.

Figure 9 illustrates the variation of transmittance of the first eyeglass 12 as a function of the angle of rotation of the axis 43 characteristic of the adjustable filtering member 20 with respect to the polarization axis 41 of the front polarizer 18.

As shown on Figure 9, the preferred range of angles of rotation is optimized as it is relatively narrow (30°) while the associated variation of transmittance (dark aspect of the eyeglass 12) is relatively high, here about 86% of the entire possible range of transmittance (varying on the ordinate axis from 0 for a total extinction to 1 for a maximum transmittance).

It should be noted that the entire possible range of transmittance of the first eyeglass depends in particular on the degree of polarization, or polarization efficiency, of the front and rear polarizers 18 and 19. For a given polarizer receiving a polarized beam of light, the polarization efficiency P can be defined by P = (T1 - T2) / (T1 + T2), where T1 can be the maximum transmission of the polarizer and occurs when the axis of the polarizer is parallel to the plane of polarization of the incident polarized beam and T2 can be the minimum transmission of the polarizer and occurs when the axis of the polarizer is perpendicular to the plane of polarization of the incident polarized beam.

Figure 9 illustrates the variation of transmittance of the first eyeglass in the case where the front polarizer 18 and the rear polarizer 19 each have a polarization efficiency equal to 100%, i.e. with a maximum transmission T1 of 100% and a minimum transmission T2 of 0%, and have their respective polarisation axis 41 and 42 that are disposed perpendicular one another.
- Maximum of transmission of the first eyeglass 12 (illustrated by "1" on the ordinate axis of the Figure 9, corresponding to a transmission of 50% of the incoming light, and corresponding to an angle θ equals to 45°)

In the above mentioned configuration, when the half-wave plate 20 is in the active state wherein the angle θ equals to 45°, the polarization plane of light received from the front polarizer 18 is rotated according to an angle of 90°. The front polarizer 18 with its maximum transmission T1 of 100% of the incoming light, transmits only a component equivalent to 50% of said incoming light since this light is here non-polarized. The rear polarizer 19, with its maximum transmission T1 of 100% of the light outgoing the half-wave plate 20, transmits 100% of said light since this light has a polarization plane parallel to the polarisation axis 42 of said rear polariser 19. As a result, the transmission of the first eyeglass 12 in this configuration is 50% of the incoming non-polarized light.
- Minimum of transmission of the first eyeglass 12 (illustrated by "0" on the ordinate axis of the Figure 9, corresponding to a transmission of 0% of the incoming light, and corresponding to an angle θ equals to 0°)

In the above mentioned configuration, when the half-wave plate 20 is in the active state wherein the angle θ equals to 0°, the polarization plane of light received from the front polarizer 18 is not rotated, and since the front and rear polarizers have their respective polarisation axis perpendicular one another the first eyeglass 12 does not transmit any incoming light.
- Intermediate transmission of the first eyeglass 12

When the half-wave plate 20 is in any active state different from the above described ones providing the maximum and minimum transmittances, the transmittance of the first eyeglass 12 takes an intermediate corresponding value as illustrated on the Figure 9.

Accordingly, the entire possible range of transmittance of the first eyeglass here goes from "0" (total extinction) to "1" (maximum transmittance i.e. transmission of 50% of the non-polarized incident light).

In a variant, the first polarizer and the second polarizer may be selected such that their respective polarization efficiency is different from 100%. For instance the first and the second polarizer may have a polarization efficiency equal or close to 83.5% with a maximum transmission T1 of 83,5% and a minimum transmission T2 of 0%. In such variant, for an angle θ varying between θ = 11° and θ = 34°, the corresponding entire possible range of transmittance goes respectively from 5% (corresponding to 0.14 of transmission on the ordinate axis of the Figure 9, and to θ equals to 11°) to 30% (corresponding to 0.86 on the ordinate axis of the figure 9, and to θ equals to 34°).

In the above embodiment described in reference to Figures 1 to 9, the carriers 29 and 129 each have a generally circular shape. In a variant, the carrier of the adjustable filtering member may have a shape that is different from generally circular. In such case, the annular recess may be configured such that no part of the peripheral portion of the carrier escapes from the annular recess regardless of the angle by which the carrier is rotated. In particular, the minimal depth required for the annular recess at any location thereof may be determined. In this respect, it should be noted that such minimal depth not only depends on the shape of the carrier but also on the range of rotation angles required for the carrier. In particular, the smaller the range of rotation angles, the smaller the minimal depth required. Here, since it is sufficient that the range of angles of rotation of the carrier be of 45°, or preferably of 30°, the minimal depth of the annular recess may be relatively small, which is favourable to the compactness of the mounting portion.

It should be noted that in the above embodiment, the first polarizer 18 is mounted in the spectacle frame 11 such that its polarization axis 41 is oriented according to a chin-forehead direction with respect to the wearer of the ophthalmic device 10. In this manner, the polarization axis 41 is most of the time oriented generally vertically when the ophthalmic device 10 is worn, so as to filter reflected light from the environment that is mainly horizontally polarized.

In a variant, the first polarizer may be mounted in the spectacle frame such that its polarization axis is oriented according to a left temple-right temple direction with respect to the wearer of the ophthalmic device. In this manner, the polarization axis is most of the time oriented generally horizontally when the ophthalmic device is worn. The polarization axis of the second polarizer may be oriented perpendicularly to the polarization axis of the first polarizer and the filtering of the polarized reflected light may thus be adjusted with the adjustable filtering member.

In the above described embodiment, the ophthalmic device 10 is configured such that the adjustable filtering properties are configured for varying the darkness of transmitted light, but in variants the filtering properties may be configured for varying at least one of darkness, colours, contrast enhancer, spectral behaviours depending on wavelengths and polarization of transmitted light.

Of course, in the above embodiment in which the ophthalmic device 10 comprises two eyeglasses 12 and 13 each mounted in a respective bearing portion 15 and 16, because the synchronization member 14 ensures that a rotating movement of the carrier 29 in the first bearing portion 15 is replicated by the other carrier in the second bearing portion 16 and reciprocally, the synchronization member 14 is configured to synchronize the selected active states of the respective adjustable filtering members 20, so that the corresponding angles of rotation of the respective polarization planes of light received from the respective first polarizers 18 are similar.

In a variant, the adjustable filtering member is an electrically controlled half-wave plate. More specifically, the adjustable filtering member may be controlled by applying a predetermined voltage value selected amongst a range of voltage values, each voltage value corresponding to a respective active state and thus a respective predetermined angle of rotation of the polarization plane. In addition, the adjustable filtering member may be fixed with respect to the frame in which it is mounted.

In another variant not according to the claimed subject-matter, the adjustable filtering member may be different from a half-wave plate, for instance a linear liquid crystal polarization rotator.

In variants that are not illustrated:
- only one of the first and second eyeglasses has adjustable filtering properties;
- the first and/or second bearing portions partially surrounds the eyeglass;
- the polarization axis of the second polarizer is substantially parallel to the polarization axis of the first polarizer;
- the carrier may have at least two radially opposite portions each configured to cooperate with the inner surface of the bearing portion, and the inner surface of the bearing portion may have a shape including at least two radially opposite arcuate portions each configured to cooperate with a respective of the radially opposite portions of the carrier to form a sliding guide for the carrier;
- the ophthalmic device is different from spectacles, for instance binoculars or a telescope;
- the first and/or second polarizers is different from a polarizer that is integrally formed with disc-shaped element/ophthalmic lens, for instance the first and/or second polarizers comprise a film configured to provide a polarizing function that is laminated on a disc-shaped element/ophthalmic lens; and/or
- the ophthalmic lens is not associated to the rear polarizer but to the front polarizer;

It should be noted more generally that the invention is not limited to the examples described and represented.

## Claims

1. Ophthalmic device having adjustable filtering properties, comprising at least one first polarizer (18), at least one second polarizer (19) which is fixed relative to said first polarizer (18), and at least one adjustable filtering member (20) located between said first and second polarizers and configured to rotate a polarization plane of light received from said first polarizer (18) and propagating towards said second polarizer (19); wherein said adjustable filtering member (20) is configured to admit a plurality of active states, in each of which said adjustable filtering member (20) rotates the polarization plane according to a respective and predetermined angle,
wherein said adjustable filtering member (20) is a half-wave plate.

2. Ophthalmic device according to claim 1, wherein it comprises at least a frame (11) in which are fixedly mounted said at least one first and at least one second polarizers.

3. Ophthalmic device according to claim 2, wherein said frame (11) is a spectacle frame having two bearing portions (15, 16) into each of which is at least partially mounted one said first polarizer (18), one said second polarizer (19) and one said adjustable filtering member (20).

4. Ophthalmic device according to claim 3, wherein said frame comprises a synchronization member (14) connected to said two bearing portions (15, 16) and configured to synchronize the selected active states of said adjustable filtering members (20) which are mounted in said two bearing portions (15, 16), so that the corresponding angles of rotation of the respective polarization planes are similar.

5. Ophthalmic device according to any one of claims 1 to 4, wherein said at least one adjustable filtering member (20) is rotatable with respect to said first and second polarizers, said active states being selected by rotating said at least one adjustable filtering member (20) according to distinct angles of rotation.

6. Ophthalmic device according to claim 5, wherein it comprises at least an actuator (33; 14) configured for rotating said at least one adjustable filtering member (20), said actuator (33; 14) extending from a carrier (29; 129) of said ophthalmic device (10) which is fixed to and at least partially surrounds said at least one adjustable filtering member (20), or is laminated on said at least one adjustable filtering member (20).

7. Ophthalmic device according to any one of claims 1 to 6, wherein said at least one second polarizer (19) has a polarizing axis (42) which is oriented parallel or perpendicular to a polarizing axis (41) of said first polarizer (18).

8. Ophthalmic device according to any one of claims 1 to 7, wherein said adjustable filtering member (20) is configured to rotate said polarization plane of light received from said at least one first polarizer (18) on a range of angles of rotation of 45° between 0° and 45°, and preferably on a range of angles of rotation of 30° between 7,5° and 37,5°.

9. Ophthalmic device according to any one of claims 1 to 8, wherein said adjustable filtering member (20) is a half-wave plate that is flat or curved.

10. Ophthalmic device according to any one of claims 1 to 9, wherein it comprises at least one ophthalmic lens on which is fixed or which is integrally formed with at least one of said first and second polarizers.

11. Ophthalmic device according to claim 10, wherein said at least one ophthalmic lens has corrective optical properties.

12. Ophthalmic device according to any one of claim 1 to 11, wherein said at least one adjustable filtering member is electrically controlled.

13. Ophthalmic device according to claim 12 wherein said at least one adjustable filtering member is controlled by applying a predetermined voltage value selected amongst a range of voltage values, each voltage value corresponding to a respective active state and thus a respective predetermined angle of rotation of the polarization plane.

14. Ophthalmic device according to any one of claims 1 to 13, wherein said adjustable filtering properties are configured for varying at least one of darkness, colours, contrast enhancer, and spectral behaviours depending on wavelengths.

## Patentansprüche

1. Ophthalmische Vorrichtung mit anpassbaren Filtereigenschaften, die umfasst: mindestens einen ersten Polarisator (18), mindestens einen zweiten Polarisator (19), der relativ zu dem ersten Polarisator (18) fest ist, und mindestens ein anpassbares Filterelement (20), das sich zwischen dem ersten und dem zweiten Polarisator befindet und dazu ausgelegt ist, eine Polarisationsebene von Licht zu drehen, das von dem ersten Polarisator (18) empfangen wird und sich zu dem zweiten Polarisator (19) hin ausbreitet; wobei das anpassbare Filterelement (20) dazu ausgelegt ist, mehrere aktive Zustände zuzulassen, in denen das anpassbare Filterelement (20) die Polarisationsebene gemäß einem jeweiligen und vorgegebenen Winkel dreht,
wobei das anpassbare Filterelement (20) eine Halbwellenplatte ist.

2. Ophthalmische Vorrichtung nach Anspruch 1, wobei sie mindestens einen Rahmen (11) umfasst, in dem der mindestens eine erste und mindestens eine zweite Polarisator fest montiert sind.

3. Ophthalmische Vorrichtung nach Anspruch 2, wobei der Rahmen (11) ein Brillenrahmen ist, der zwei Lagerabschnitte (15, 16) aufweist, in die jeweils ein genannter erster Polarisator (18), ein genannter zweiter Polarisator (19) und ein genanntes anpassbares Filterelement (20) mindestens teilweise montiert sind.

4. Ophthalmische Vorrichtung nach Anspruch 3, wobei der Rahmen ein Synchronisationselement (14) umfasst, das mit den zwei Lagerabschnitten (15, 16) verbunden ist und dazu ausgelegt ist, die ausgewählten aktiven Zustände der anpassbaren Filterelemente (20), die in den zwei Lagerabschnitten (15, 16) montiert sind, zu synchronisieren, so dass die entsprechenden Drehwinkel der jeweiligen Polarisationsebenen ähnlich sind.

5. Ophthalmische Vorrichtung nach einem der Ansprüche 1 bis 4, wobei das mindestens eine anpassbare Filterelement (20) in Bezug auf den ersten und den zweiten Polarisator drehbar ist, wobei die aktiven Zustände durch Drehen des mindestens einen anpassbaren Filterelements (20) gemäß unterschiedlichen Drehwinkeln ausgewählt werden.

6. Ophthalmische Vorrichtung nach Anspruch 5, wobei sie mindestens einen Aktor (33; 14) umfasst, der zum Drehen des mindestens einen anpassbaren Filterelements (20) ausgelegt ist, wobei sich der Aktor (33; 14) von einem Träger (29; 129) der ophthalmischen Vorrichtung (10) aus erstreckt, der an dem mindestens einen anpassbaren Filterelement (20) fixiert ist und dieses mindestens teilweise umgibt, oder auf das mindestens eine anpassbare Filterelement (20) laminiert ist.

7. Ophthalmische Vorrichtung nach einem der Ansprüche 1 bis 6, wobei der mindestens eine zweite Polarisator (19) eine Polarisationsachse (42) aufweist, die parallel oder senkrecht zu einer Polarisationsachse (41) des ersten Polarisators (18) orientiert ist.

8. Ophthalmische Vorrichtung nach einem der Ansprüche 1 bis 7, wobei das anpassbare Filterelement (20) dazu ausgelegt ist, die Polarisationsebene des aus dem mindestens einen ersten Polarisator (18) empfangenen Lichts in einem Drehwinkelbereich von 45° zwischen 0° und 45° und vorzugsweise in einem Drehwinkelbereich von 30° zwischen 7,5° und 37,5° zu drehen.

9. Ophthalmische Vorrichtung nach einem der Ansprüche 1 bis 8, wobei das anpassbare Filterelement (20) eine Halbwellenplatte ist, die flach oder gekrümmt ist.

10. Ophthalmische Vorrichtung nach einem der Ansprüche 1 bis 9, wobei sie mindestens eine ophthalmische Linse umfasst, an der mindestens einer des ersten und zweiten Polarisators fixiert ist oder die einteilig mit mindestens einem des ersten und zweiten Polarisators ausgebildet ist.

11. Ophthalmische Vorrichtung nach Anspruch 10, wobei die mindestens eine ophthalmische Linse korrigierende optische Eigenschaften aufweist.

12. Ophthalmische Vorrichtung nach einem der Ansprüche 1 bis 11, wobei das mindestens eine anpassbare Filterelement elektrisch gesteuert wird.

13. Ophthalmische Vorrichtung nach Anspruch 12, wobei das mindestens eine anpassbare Filterelement durch Anlegen eines vorgegebenen Spannungswerts gesteuert wird, der aus einem Bereich von Spannungswerten ausgewählt wird, wobei jeder Spannungswert einem jeweiligen aktiven Zustand und somit einem jeweiligen vorgegebenen Drehwinkel der Polarisationsebene entspricht.

14. Ophthalmische Vorrichtung nach einem der Ansprüche 1 bis 13, wobei die anpassbaren Filtereigenschaften dazu ausgelegt sind,
Dunkelheit und/oder Farben und/oder Kontrastverstärkung und/oder wellenlängenabhängiges Spektralverhalten zu variieren.

## Revendications

1. Dispositif ophtalmique ayant des propriétés de filtrage réglables, comprenant au moins un premier polariseur (18), au moins un deuxième polariseur (19) qui est fixe par rapport audit premier polariseur (18), et au moins un élément de filtrage réglable (20) situé entre lesdits premier et deuxième polariseurs et conçu pour faire tourner un plan de polarisation de la lumière reçue depuis ledit premier polariseur (18) et se propageant vers ledit deuxième polariseur (19) ; dans lequel ledit élément de filtrage réglable (20) est conçu pour admettre une pluralité d'états actifs, dans chacun desquels ledit élément de filtrage réglable (20) fait tourner le plan de polarisation d'un angle respectif et prédéterminé, dans lequel ledit élément de filtrage réglable (20) est une lame demi-onde.

2. Dispositif ophtalmique selon la revendication 1, dans lequel il comprend au moins une monture (11) sur laquelle sont montés de façon fixe lesdits au moins un premier et au moins un deuxième polariseurs.

3. Dispositif ophtalmique selon la revendication 2, dans lequel ladite monture (11) est une monture de lunettes présentant deux parties de support (15, 16) dans chacune desquelles sont au moins partiellement montés un dit premier polariseur (18), un dit deuxième polariseur (19) et un dit élément de filtrage réglable (20).

4. Dispositif ophtalmique selon la revendication 3, dans lequel ladite monture comprend un élément de synchronisation (14) relié auxdites deux parties de support (15, 16) et conçu pour synchroniser les états actifs sélectionnés desdits éléments de filtrage réglables (20) qui sont montés dans lesdites deux parties de support (15, 16), de sorte que les angles de rotation correspondants des plans de polarisation respectifs sont similaires.

5. Dispositif ophtalmique selon l'une quelconque des revendications 1 à 4, dans lequel ledit au moins un élément de filtrage réglable (20) est rotatif par rapport auxdits premier et deuxième polariseurs, lesdits états actifs étant sélectionnés par rotation dudit au moins un élément de filtrage réglable (20) selon des angles de rotation distincts.

6. Dispositif ophtalmique selon la revendication 5, dans lequel il comprend au moins un actionneur (33 ; 14) conçu pour faire tourner ledit au moins un élément de filtrage réglable (20), ledit actionneur (33 ; 14) s'étendant depuis un support (29 ; 129) dudit dispositif ophtalmique (10) qui est fixé à et entoure au moins partiellement ledit au moins un élément de filtrage réglable (20), ou est stratifié sur ledit au moins un élément de filtrage réglable (20).

7. Dispositif ophtalmique selon l'une quelconque des revendications 1 à 6, dans lequel ledit au moins un deuxième polariseur (19) présente un axe de polarisation (42) qui est orienté parallèlement ou perpendiculairement à un axe de polarisation (41) dudit premier polariseur (18).

8. Dispositif ophtalmique selon l'une quelconque des revendications 1 à 7, dans lequel ledit élément de filtrage réglable (20) est conçu pour faire tourner ledit plan de polarisation de la lumière reçue depuis ledit au moins un premier polariseur (18) sur une plage d'angles de rotation de 45° comprise entre 0° et 45°, et de préférence sur une plage d'angles de rotation de 30° comprise entre 7,5° et 37,5°.

9. Dispositif ophtalmique selon l'une quelconque des revendications 1 à 8, dans lequel ledit élément de filtrage réglable (20) est une lame demi-onde qui est plate ou incurvée.

10. Dispositif ophtalmique selon l'une quelconque des revendications 1 à 9, dans lequel il comprend au moins une lentille ophtalmique sur laquelle est fixé ou qui est formée d'une seule pièce avec au moins un desdits premier et deuxième polariseurs.

11. Dispositif ophtalmique selon la revendication 10, dans lequel ladite au moins une lentille ophtalmique présente des propriétés optiques correctrices.

12. Dispositif ophtalmique selon l'une quelconque des revendications 1 à 11, dans lequel ledit au moins un élément de filtrage réglable est contrôlé électriquement.

13. Dispositif ophtalmique selon la revendication 12 dans lequel ledit au moins un élément de filtrage réglable est contrôlé par application d'une valeur de tension prédéterminée sélectionnée dans une plage de valeurs de tension, chaque valeur de tension correspondant à un état actif respectif et ainsi à un angle de rotation prédéterminé respectif du plan de polarisation.

14. Dispositif ophtalmique selon l'une quelconque des revendications 1 à 13, dans lequel lesdites propriétés de filtrage réglables sont conçues pour faire varier au moins un élément parmi l'obscurité, les couleurs, l'amplification du contraste, et des comportements spectraux dépendant de la longueur d'onde.
